# EUROPEAN PATENT APPLICATION

(11) **EP 4 446 823 A1**
(43) Date of publication of application: **16.10.2024**
(21) Application number: 23167786.5
(22) Date of filing: 13.04.2023
(51) Int. Cl.: G05B 15/02

(54) **SYSTEM AND METHOD FOR CONTROLLING A HEATING, VENTILATION AND AIR CONDITIONING SYSTEM**

(71) Applicant: Robert Bosch GmbH, 70442 Stuttgart (DE)
(72) Inventor: Cola, Fabrizio, 534635 Singapore (SG); Tanyildiz, Baris, 574036 Singapore (SG)

(57) **Abstract**

A method 800 for controlling a heating, ventilation and air conditioning (HVAC) system 10 in a building using a controlling system 100, the controlling system 100 comprising a HVAC data collector 110, a user data collector 120, a processor 130 and an HVAC controller 140. The method 800 comprises: a step 810 of collecting HVAC data 12 of the HVAC system 10 by the HVAC data collector 110; a step 820 of collecting user data 22 of each of at least one user 20 by the user data collector 120; a step 830 of determining, by the processor 130, a state space data 30, an action space data 32 and a reward function 40 for each of a plurality of time windows of a day from the collected HVAC data 12, the collected user data 22, thermal comfort data 24 of the user 20 based on at least one target of a use pattern 14 of the time window; and a step 850 of obtaining, by the processor 130, optimal controlling action data 60 for each of the plurality of time windows of a day based on a reinforcement learning (RL) control algorithm 50 and the state space data 30 of the time window of a day for controlling the HVAC system 10. The respective use pattern 14 for each of the plurality of time windows of a day can be determined according to a schedule.

## Description

### TECHNICAL FIELD

This disclosure relates to a system and a method for controlling a heating, ventilation and air conditioning (HVAC) system.

### BACKGROUND

Use pattern of a heating, ventilation and air conditioning (HVAC) system in buildings, may change over a day, not just in terms of occupancy but also on users' expectations/requirements of the HVAC system. For example, in a residential building, users' requirements from their air conditioner during sleep/night time can be very different from their daytime use in terms of noise allowed or preferred temperature. Additionally, HVAC system usage can vary depending on users' needs. For example, the home may be used as an office in the morning/afternoon, while social activity or cooking are the main uses in the evening. Users' requirements for working during the morning/afternoon time can be very different from their requirements for social activity/cooking in the evening time in terms of thermal comfort and energy saving.

Reinforcement learning (RL) is a machine learning training method based on rewarding desired behaviors and/or punishing undesired ones. RL based control algorithms may be used to control and improve the operation of air conditioners in either commercial or residential buildings. The RL control algorithms in the prior art provide a single reward system, that may include energy savings, room/set temperature, and Indoor Air Quality (IAQ) targets. However, the RL control algorithms in the prior art do not consider the different use patterns and does not prioritize different users' requirements at different times of a day.

A solution is needed to provide an improved method for controlling/optimizing the HVAC system in a building.

### SUMMARY

This disclosure was conceptualized to assist in controlling a heating, ventilation and air conditioning (HVAC) system in a building in a way to provide tailored operation control for different use patterns throughout the day. The HVAC system can include components such as a furnace, boiler, damper, zone-valve, mixing valve, air source heat pump, ground source heat pump, hydronic heater, forced air heater, energy recovery ventilation (ERV), heat recovery ventilation (HRV), electrical resistance heating, central air conditioning, mini-split air conditioner, portable air conditioner, small diameter/high velocity (SDHV) heating/cooling system, humidification, dehumidification, or any other suitable HVAC equipment. A technical solution is provided in the form of a method and a system for controlling a HVAC system in a building.

The controlling system comprises a HVAC data collector configured to collect HVAC data of the HVAC system; a user data collector configured to collect user data of each of at least one user; and a processor configured to determine a state space data, an action space data and a reward function for each of a plurality of time windows of a day from the collected HVAC data, the collected user data, thermal comfort data of the user based on at least one target of a use pattern of the time window; and obtain optimal controlling action data for each of the plurality of time windows of a day based on a reinforcement learning (RL) control algorithm and the state space data of the time window of a day for controlling the HVAC system, wherein the respective use pattern for each of the plurality of time windows of a day is determined according to a schedule.

The method comprises a step of collecting HVAC data of the HVAC system by a HVAC data collector; a step of collecting user data of each of at least one user by a user data collector; a step of determining, by a processor, a state space data, an action space data and a reward function for each of a plurality of time windows of a day from the collected HVAC data, the collected user data, thermal comfort data of the user based on at least one target of a use pattern of the time window; and a step of obtaining, by the processor, optimal controlling action data for each of the plurality of time windows of a day based on a reinforcement learning (RL) control algorithm and the state space data of the time window of a day for controlling the HVAC system, wherein the respective use pattern for each of the plurality of time windows of a day is determined according to a schedule.

Another aspect of the disclosure relates to various embodiments of a computer program product. The computer program product comprising instructions which, when the program is executed by a computer, cause the computer to carry out: a step of determining a state space data, an action space data and a reward function for each of a plurality of time windows of a day from HVAC data of a heating, ventilation and air conditioning (HVAC) system, user data of each of at least one user, thermal comfort data of the user based on at least one target of a use pattern of the time window, wherein the HVAC data is collected by a HVAC data collector, and the user data is collected by a user data collector; a step of obtaining optimal controlling action data for each of the plurality of time windows of a day based on a reinforcement learning (RL) control algorithm and the state space data of the time window of a day for controlling the HVAC system, wherein the respective use pattern for each of the plurality of time windows of a day is determined according to a schedule.

Another aspect of the disclosure relates to various embodiments of a non-transitory computer-readable storage medium. The non-transitory computer-readable storage medium comprising instructions which, when executed by a computer, cause the computer to carry out: a step of determining a state space data, an action space data and a reward function for each of a plurality of time windows of a day from HVAC data of a heating, ventilation and air conditioning (HVAC) system, user data of each of at least one user, thermal comfort data of the user based on at least one target of a use pattern of the time window, wherein the HVAC data is collected by a HVAC data collector, and the user data is collected by a user data collector; a step of obtaining optimal controlling action data for each of the plurality of time windows of a day based on a reinforcement learning (RL) control algorithm and the state space data of the time window of a day for controlling the HVAC system, wherein the respective use pattern for each of the plurality of time windows of a day is determined according to a schedule.

The system in the present disclosure trains a series of Reinforcement Learning control algorithms (or "agents") for HVAC system operation. Each agent's objective is defined independently from the other and depends on the home occupants' behaviours and expectations. Dividing the main HVAC control in sub-problems can help reduce the problem size and in turn speed up the training and improve the performance of the controller.

The dependent claims define some examples associated with the system and method, respectively.

### BRIEF DESCRIPTION OF THE DRAWINGS

The present disclosure will be better understood with reference to the detailed description when considered in conjunction with the non-limiting examples and the accompanying drawings, in which:
- FIG. 1 shows a schematic illustration of a controlling system for controlling a heating, ventilation and air conditioning (HVAC) system in accordance with some embodiments;
- FIG. 2 shows a relation between the predicted percentage of dissatisfaction (PPD) and the predicted mean vote (PMV) of the user;
- FIG. 3 shows a schematic illustration of calculating thermal comfort data using air temperature, humidity, mean radiant temperature, air speed, clothing level, metabolic rate;
- FIG. 4 shows a schematic illustration of training a RL control algorithm and obtaining optimal controlling action data for each of the plurality of time windows of a day for controlling the HVAC system;
- FIG. 5 shows an example of the RL control algorithms trained for each of the plurality of time windows of a day respectively;
- FIG. 6 is a flow chart depicting the method for controlling a HVAC system in accordance with some embodiments.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the systems or methods are analogously valid for the other systems or methods.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art.

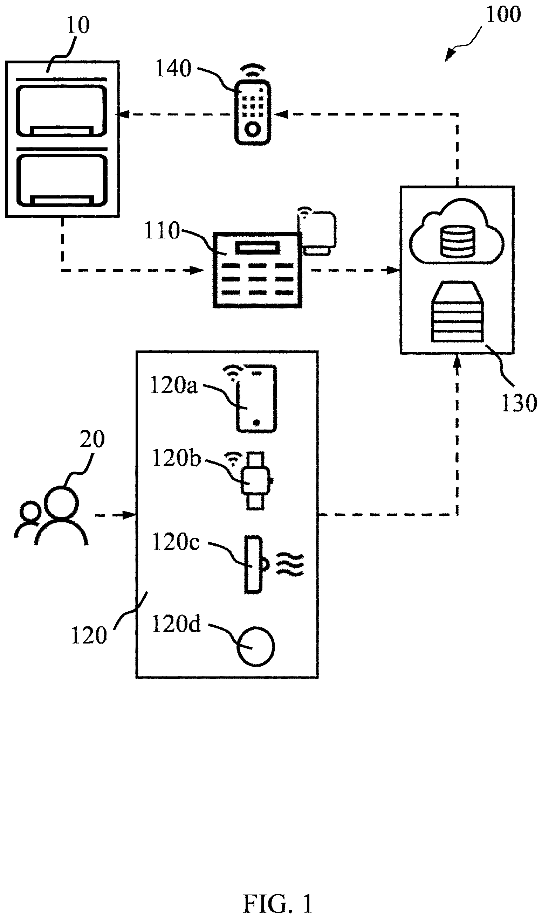

According to an aspect of the disclosure, a controlling system 100 is provided for controlling a heating, ventilation and air conditioning (HVAC) system 10 in a building, e.g., a commercial or residential building. FIG.1 shows a schematic illustration of the controlling system 100.

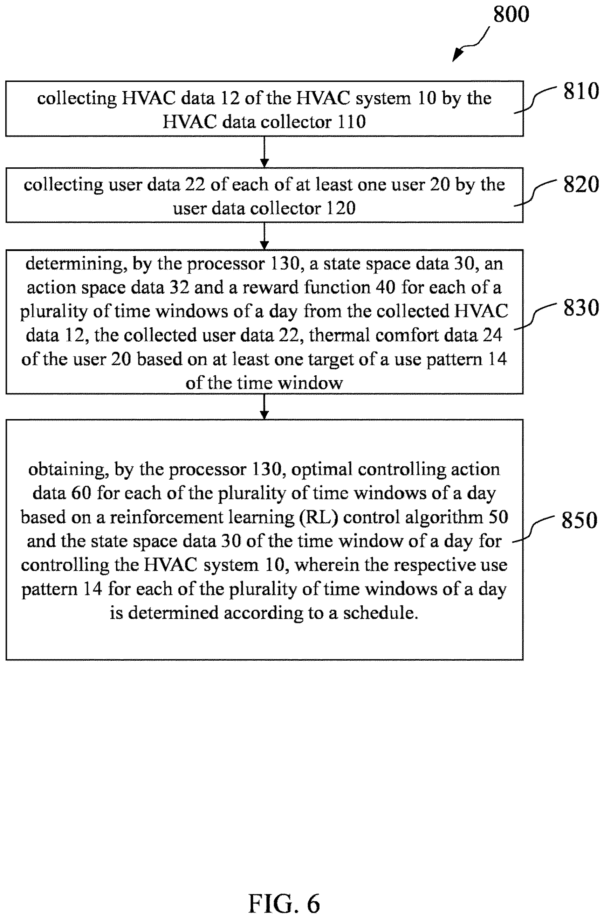

According to another aspect of the disclosure, a method 800 is provided for controlling the HVAC system 10. FIG.6 is a flow chart depicting the method 800.

As shown in FIG. 1, the controlling system 100 comprises an HVAC data collector 110, a user data collector 120, a processor 130 and an HVAC controller 140. The controlling system 100 is configured to implement the method 800 of FIG. 6.

The HVAC data collector 110 is configured to collect HVAC data 12 of the HVAC system 10 in a building. The HVAC data 12 may comprise room temperature, room humidity, operating setpoint for temperature, operating setpoint for fan speed, operational mode (such as cooling, heating, ventilation, dehumidification), refrigeration cycle temperatures, pressures and compressor speed, and energy consumption. The HVAC data collector 110 can comprise a power metering device for collecting the energy consumption. Alternatively, the energy consumption can be estimated using other cycle-level data or using nominal data from the product specifications. The HVAC data 12 can be collected via the HVAC data collector 110 and sent to the processor 130 at a pre-defined frequency, such as every minute, every 10 minutes, or every hour. The HVAC data collector 110 can include a centralized controller device connected to a domestic router or a Wi-Fi dongle connected to a home network. A smartphone equipped with an interfacing application can be connected to the HVAC data collector 110 for reading the HVAC data 12 from the HVAC system 10.

The user data collector 120 can be configured to collect user data 22 from at least one user 20 of the HVAC system 10 in a building. The user data 22 can include temperature and humidity, light intensity, noise in the building, outdoor environment information, position, and movement speed of the user 20, physiological data of the user 20 such as heart rate, heart rate variability, blood pressure and blood oxygen levels of the user 20.

The user data collector 120 can include sensors 120a embedded in smartphones of the user 20, wearable devices 120b, and/or third-party sensors 120c such as Infrared (IR) sensors. The sensors 120a embedded in smartphones of the user 20 can be configured to collect user data 22 such as user-centric data including temperature and humidity, light intensity, noise in the building, position, and movement speed of the user 20. The user-centric data may be displayed on the interfacing application of the smartphone. The wearable devices 120b can be configured to collect user data 22 such as physiological data of the user 20 including heart rate, heart rate variability, blood pressure and oxygen levels of the user 20. The third-party sensors 120c such as Infrared (IR) sensors can be configured to measure temperature in the building. In some embodiments, the user data collector 120 can also comprise an Indoor Air Quality ("IAQ") monitor 120d. The IAQ monitor 120d can collect user data 22 including IAQ data such as Carbon dioxide (CO₂) levels, Total Volatile Organic Compounds (TVOC), Particulate Matter (PM) 10, PM 2.5. The user data collector 120 can comprise an interfacing application for reading the user data 22.

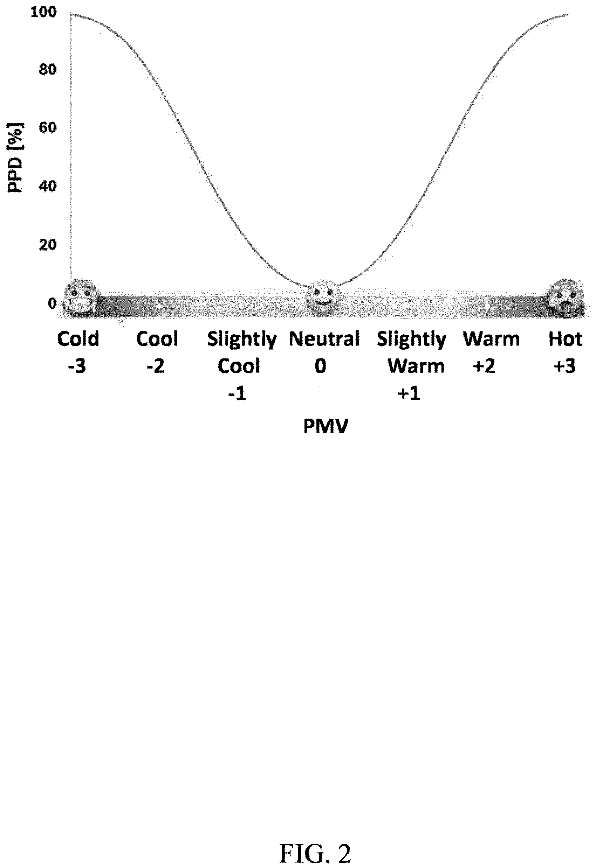

The processor 130 can comprise a local server and/or a cloud server. The processor 130 can be configured to calculate thermal comfort data 24 of the user 20 such as Predicted Mean Vote (PMV) or predicted percentage of dissatisfaction (PPD), based on American Society of Heating, Refrigerating and Air-Conditioning Engineers (ASHRAE)'s standard function, using air temperature 22a, humidity 22b, mean radiant temperature 22c, air speed 22d, clothing level 22e and metabolic rate 22f. The clothing level 22e determines thermal insulation. The PMV is an index that aims to predict the mean value of votes of the occupants or users on a seven-point thermal sensation scale. Within the PMV index, +3 translates as hot, +2 translates as warm, +1 translates as slightly warm, 0 translates as neutral, -1 translates as slightly cool, -2 translates as cool, -3 translates as cold. Once the PMV is calculated, the predicted percentage of dissatisfaction (PPD), or index that establishes a quantitative prediction of the percentage of thermally dissatisfied occupants/users (i.e., too warm or too cold), can be determined. PPD essentially gives the percentage of people predicted to experience local discomfort. FIG. 2 shows a relation between the PPD and the PMV.

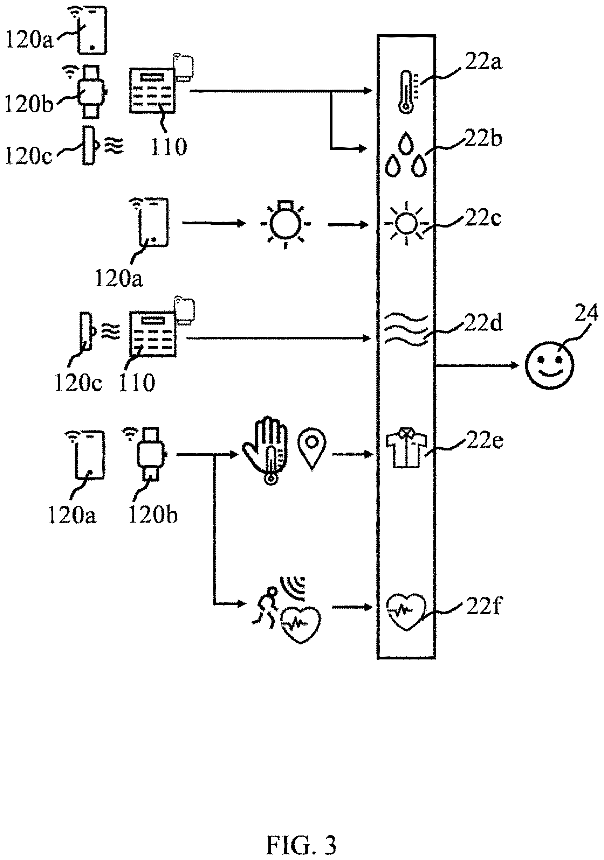

FIG. 3 shows a schematic illustration of calculating the thermal comfort data 24 using air temperature 22a, humidity 22b, mean radiant temperature 22c, air speed 22d, clothing level 22e and metabolic rate 22f obtained from the HVAC data collector 110, the user data collector 120 and the time of the day. The temperature 22a and humidity 22b may be averaged values of data collected from multiple sources, such as the HVAC data collector 110 or the user data collector 120. The mean radiant temperature 22c may be estimated using the time of a day, outdoor temperature, light intensity measured from the sensors 120a embedded in the smartphone or a combination thereof. The air speed 22d may be estimated from fan speed information and sizing information of the air conditioner collected by HVAC data collector 110 or third-party sensors 120c. The clothing level 22e may be estimated from position and skin temperature measured by user data collector 120 such as sensors 120a embedded in the smartphone of the users or wearable devices 120b. The metabolic rate 22f may be estimated using movement speed, heart rate, blood oxygen level data or a combination thereof. The movement speed information can be collected from user data collector 120 such as sensors 120a embedded in the smartphone of the users 20 or wearable devices 120b. The heart rate and/or blood oxygen level can be measured by wearable devices 120b.The air temperature 22a, humidity 22b, mean radiant temperature 22c, air speed 22d, clothing level 22e can be used to assess the heat losses such as skin diffusive, sweating, respiration, convection and radiation. The metabolic rate 22f can be used to assess the body heat production. The heat losses and body heat production can be used to calculate the thermal comfort data 24.

Alternatively, the thermal comfort data 24 of the user 20 can be obtained based on feedback of the user 20 collected by a feedback collector 132, such as a smartphone application.

The processor 130 can be configured to merge the HVAC data 12, the user data 22, and the thermal comfort data 24 of the users 20.

The processor 130 can be configured to determine a respective use pattern 14 for each of a plurality of time windows of a day according to a schedule, e.g., a predetermined schedule or a schedule set by a user 20. The start time and the end time of each time window of a day can be determined according to a schedule, e.g., a predetermined schedule or a schedule set by a user. Examples of the use patterns 14 can include "sleep", "productivity", "work", "social activity" and "cooking". For example, for a time window from 10pm to 8am, the use pattern 14 can be determined as "sleep" use pattern 14a; for a time window from 8am to 6pm, the use pattern 14 can be determined as "productivity" use pattern 14b; for a time window from 6pm to 10pm, the use pattern 14 can be determined as "social activity" use pattern 14c.

In some embodiments, the use pattern 14 for the same time window in different days can be kept the same. In some embodiments, the use pattern 14 for the same time window in different days can be varied if required. In some embodiments, the use pattern 14 for the same time window in different days of a month can be kept the same, and the use pattern 14 for the same time window can be changed for the days in a different month. In some embodiments, the use pattern 14 for the same time window in different weekdays can be kept the same, and the use pattern 14 for the same time window in the weekends can be different from the weekdays.

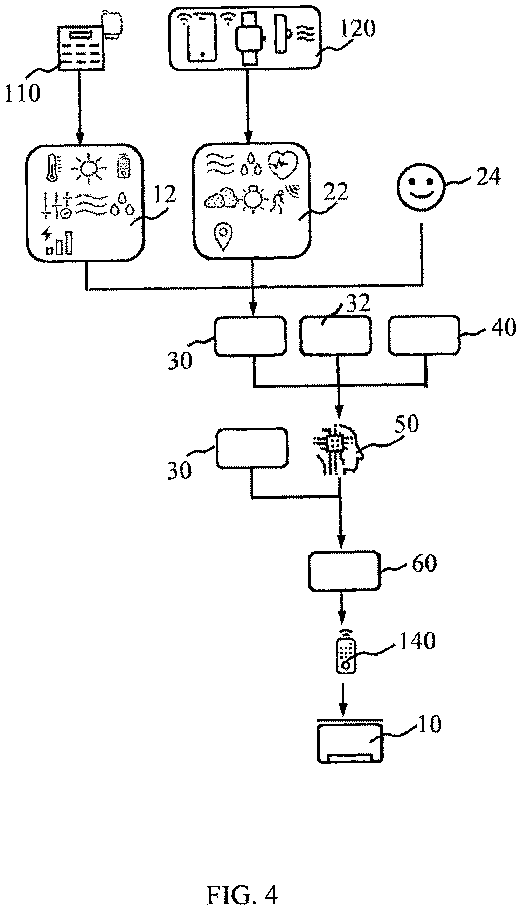

FIG. 4 shows a schematic illustration of training a reinforcement learning (RL) control algorithm 50 and obtaining optimal controlling action data 60 for each of the plurality of time windows of a day for controlling the HVAC system 10. The processor 130 can be configured to determine a corresponding state space data 30, action space data 32 and a reward function 40 for each of the plurality of time windows of a day from the collected HVAC data 12, the collected use data 22, the thermal comfort data 24 of the user 20 based on at least one target of a use pattern 14 of the time window.

The state space data 30 for each of the plurality of the time windows of a day can be determined from the collected HVAC data 12, the collected user data 22 and the obtained thermal comfort data 24. For example, for a time window from 12am to 8am, the use pattern 14 can be "sleep" use pattern 14a, the state space data 30 can be fan speed, operational mode (such as cooling, heating, ventilation, dehumidification) of the HVAC system 10 and/or air temperature. For a time window from 8am to 6pm, the use pattern 14 can be "productivity" use pattern 14b, the state space data 30 can be temperature, operational mode (such as cooling, heating, ventilation, dehumidification) of the HVAC system 10 and/or refrigeration cycle temperatures and pressures. For a time window from 6pm to 12 am, the use pattern 14 can be "social activity" use pattern 14c, the state space data 30 can be fan speed and/or temperature.

The action space data 32 for each of the plurality of the time windows of a day can be determined from the collected HVAC data 12. For example, for a time window from 12am to 8am, the use pattern 14 can be "sleep" use pattern 14a, the action space data 32 can be the fan speed and operation mode of the HVAC system 10. For a time window from 8am to 6pm, the use pattern 14 can be "productivity" use pattern 14b, the action space data 32 can be operating setpoint for temperature and operation mode of the HVAC system 10. For a time window from 6pm to 12 am, the use pattern 14 can be "social activity" use pattern 14c, the action space data 32 can be fan speed and operating setpoint for temperature of the HVAC system 10.

The reward function 40 for each of the plurality of time windows of a day can be determined based on the at least one target of the use pattern 14 of the time window. The at least one target of the use pattern 14 can comprise "sleep quality", "noise reduction", "thermal comfort" or "energy saving". The at least one target for each of the plurality of use patterns 14 can be determined according to a predetermined setting or a setting selected by the user 20. In some embodiments, the targets for the use patterns 14 may be mutually exclusive. Therefore, each use pattern 14 can only be assigned one target. In some embodiments, multiple targets can be assigned to a use pattern 14, and each target can be assigned a priority such as "low", "medium" or "high" according to a predetermined setting or a setting selected by a user 20. For example, multiple targets of "thermal comfort" and "energy saving" can be assigned to the "productivity" use pattern 14b, the target "thermal comfort" can be assigned a priority of "high", and the target "energy saving" can be assigned a priority of "low".

When a single target is assigned to the use pattern 14 of a time window, a function of the available data points can be used to represent the reward function 40 of the time window. For example, when a single target "sleep quality" is assigned to the "sleep" use pattern 14a of a time window from 12am to 8am, the reward function 40 of the time window can be represented as a function of a combination of noise reduction and optimal physiological parameters collected by the user's wearable device 120b.

When different targets are assigned to the use pattern 14 of a time window and a priority is assigned to each of the multiple targets, a weight factor can be further applied to each reward function and summed up to return an overall reward function 40 of the time window. For example, when a "productivity" use pattern 14b of the time window from 8am to 6pm is assigned targets of "thermal comfort" and "energy saving", and the target of "thermal comfort" is assigned a priority of "high" and the target of "energy saving" is assigned a priority of "low", the respective reward function of "thermal comfort" and "energy saving" may be scaled with a factor of 0.8 and 0.2 respectively, and are summed up to obtain an overall reward function 40 of the time window from 8am to 6pm.

The processor 130 can be configured to obtain an optimal or near-optimal controlling action data 60 for each of the plurality of time windows of a day based on a RL control algorithm 50 and the state space data 30 of the time window of a day for controlling the HVAC system 10. The optimal controlling action data 60 can comprise operating setpoint for temperature, fan speed and operational mode for each of the plurality of time windows of a day.

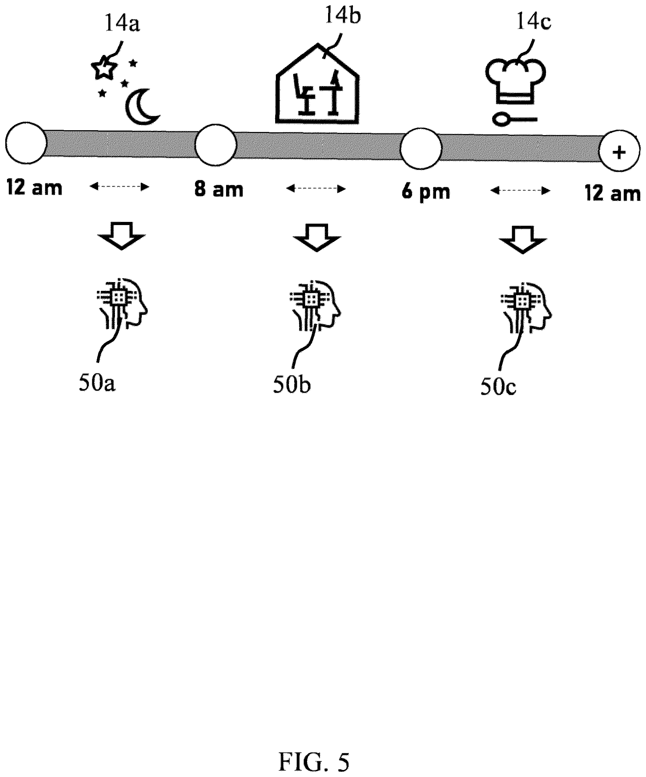

The processor 130 can be configured to train the respective RL control algorithm 50 for each of the plurality of time windows of a day using the state space data 30, the action space data 32, the reward function 40 for the time window of a day and a training algorithm. The training algorithm can include deep Q learning, batch-constrained Q-learning, policy gradient, deep deterministic policy gradient or Actor-Critic algorithms. FIG. 5 shows an example of the RL control algorithms 50a, 50b and 50c trained for each of the plurality of time windows (i.e., a time window from 12am to 8am, a time window from 8am to 6pm, and a time window from 6pm to 12am) of a day respectively. In this example, for the time window from 12am to 8am, the use pattern 14 is "sleep" use pattern 14a, the at least one target of the "sleep" use pattern 14a is "energy saving" with a priority of "low" and "thermal comfort" with a priority of "high", the RL control algorithm 50a is trained; for the time window from 8am to 6pm, the use pattern 14 is "productivity" use pattern 14b, the at least one target of the "productivity" use pattern 14b is "energy saving" with a priority of "high" and "thermal comfort" with a priority of "medium", the RL control algorithm 50b is trained; for the time window from 6pm to 12am, the use pattern 14 is "cooking" use pattern 14c, the at least one target of the "cooking" use pattern 14c is "energy saving" with a priority of "medium" and "thermal comfort" with a priority of "low", the RL control algorithm 50c is trained.

In some embodiments, the RL control algorithms 50 can be trained offline using batch learning method. In the batch learning, data including the state space data 30, the action space data 32 and the reward function 40 is accumulated over a period of time. The RL control algorithms 50 are then trained with the accumulated data from time to time in batches. In some embodiments, the RL control algorithms 50 can be trained online. In the online training, the RL control algorithms 50 are trained incrementally from a stream of live data including the state space data 30, the action space data 32 and the reward function 40.

The HVAC data 12, the user data 22, the thermal comfort data 24, the respective use pattern 14 for each time window, the start time and the end time of each time window, the state space data 30, the action space data 32, the reward function 40 and the trained RL control algorithm 50 for each of the plurality of time windows of a day can be stored in a local or remote database. The database can be a local offline database, or a connected, cloud-based database. The database can comprise a local server and/or a cloud server.

The HVAC controller 140 can be configured to control the HVAC system 10 according to the optimal controlling action data 60 for each of the plurality of time windows of a day. In some embodiments, the HVAC controller 140 can be a smartphone equipped with an interfacing application.

FIG. 6 is a flow chart depicting a method 800 for controlling a heating, ventilation and air conditioning (HVAC) system 10 in a building. The method 800 comprises:
- a step 810 of collecting HVAC data 12 of the HVAC system 10 by the HVAC data collector 110;
- a step 820 of collecting user data 22 of each of at least one user 20 by the user data collector 120;
- a step 830 of determining, by the processor 130, a state space data 30, an action space data 32 and a reward function 40 for each of a plurality of time windows of a day from the collected HVAC data 12, the collected user data 22, thermal comfort data 24 of the user 20 based on at least one target of a use pattern 14 of the time window;
- a step 850 of obtaining, by the processor 130, optimal controlling action data 60 for each of the plurality of time windows of a day based on a reinforcement learning (RL) control algorithm 50 and the state space data 30 of the time window of a day for controlling the HVAC system 10.

The respective use pattern 14 for each of the plurality of time windows of a day can be determined according to a schedule, e.g., a predetermined schedule or a schedule set by the at least one user 20.

The method 800 can further a step 840 of training, by the processor 130, the respective RL control algorithm 50 for each of the plurality of time windows of a day using the state space data 30, the action space data 32, the reward function 40 for the time window of a day and a training algorithm. The training algorithm can include deep Q learning, batch-constrained Q-learning, policy gradient, deep deterministic policy gradient or Actor-Critic algorithms.

The optimal controlling action data 60 can comprise an operating setpoint for temperature, fan speed and operation mode for each of the plurality of time windows of a day.

The method 800 can further comprise a step 860 of controlling, by the HVAC controller 140, the HVAC system 10 according to the optimal controlling action data 60 for each of the plurality of time windows of a day.

The at least one target for each of the plurality of use patterns 14 can be determined according to a predetermined setting or a setting selected by the user.

The thermal comfort data 24 of the user 20 can be calculated based on ASHRAE's standard function using air temperature, humidity, mean radiant temperature, air speed, clothing level and metabolic rate obtained from the HVAC data collector 110, the user data collector 120 and the time of the day.

The thermal comfort data 24 of the user 20 can be obtained based on feedback of the user 20 collected by a feedback collector 132.

The HVAC data 12 can comprise room temperature, room humidity, operating set point for temperature, operating set point for fan speed, operational mode, refrigeration cycle temperatures, pressures and compressor speed, and energy consumption.

The user data 22 can comprise temperature and humidity, light intensity, noise in the building, outdoor environment information, position, movement speed and physiological data of the user 20.

Furthermore, one or more of the steps of a method described herein may be performed in parallel rather than sequentially.

In another aspect of the present disclosure, there is provided a computer program product comprising instructions which, when the program is executed by a computer, cause the computer to carry out: a step 830 of determining a state space data 30, an action space data 32 and a reward function 40 for each of a plurality of time windows of a day from HVAC data 12 of a heating, ventilation and air conditioning (HVAC) system 10, user data 22 of each of at least one user 20, thermal comfort data 24 of the user 20 based on at least one target of a use pattern 14 of the time window, wherein the HVAC data 12 is collected by a HVAC data collector 110, and the user data 22 is collected by a user data collector 120; a step 850 of obtaining optimal controlling action data 60 for each of the plurality of time windows of a day based on a reinforcement learning (RL) control algorithm 50 and the state space data 30 of the time window of a day for controlling the HVAC system 10, wherein the respective use pattern 14 for each of the plurality of time windows of a day is determined according to a schedule.

In another aspect of the present disclosure, there is provided a non-transitory computer-readable storage medium storing computer executable code comprising instructions which, when executed by a computer, cause the computer to carry out: a step 830 of determining a state space data 30, an action space data 32 and a reward function 40 for each of a plurality of time windows of a day from HVAC data 12 of a heating, ventilation and air conditioning (HVAC) system 10, user data 22 of each of at least one user 20, thermal comfort data 24 of the user 20 based on at least one target of a use pattern 14 of the time window, wherein the HVAC data 12 is collected by a HVAC data collector 110, and the user data 22 is collected by a user data collector 120; a step 850 of obtaining optimal controlling action data 60 for each of the plurality of time windows of a day based on a reinforcement learning (RL) control algorithm 50 and the state space data 30 of the time window of a day for controlling the HVAC system 10, wherein the respective use pattern 14 for each of the plurality of time windows of a day is determined according to a schedule.

Examples of non-transitory computer-readable storage medium are a flash memory, a hard disk drive, a CD-ROM, or a DVD.

By training independent RL control algorithms 50 for different times of a day, the RL control algorithms 50 can define different reward metrics to reach specific targets at different times (e.g., maximize quality of sleep at night, or minimize energy consumption during "home office" hours). By keeping the RL control algorithms 50 independent for different times of a day, the state space data 30 for each RL control algorithm 50 can also be differentiated so to limit the size of the state space data 30 to only what is needed for a particular objective. The different RL control algorithms 50 can then be scheduled to be used based on a timetable or via other decision variables. This reduces the complexity of the problem, leading to an improvement in the performance of the RL control algorithms 50 and to a reduction in the training time of the RL control algorithms 50.

The thermal comfort data 24 such as the PMV, either by directly asking the user via a feedback collector 132, or by calculating it with the available data, is used as a part of the reward function 40 to give a more direct measurement of the user expectations. By including the thermal comfort as part of the target of the RL control algorithms 50, where the home use pattern calls for its use based on user expectations, more user-centric optimization can be achieved, and further improvement on personal well-being and on energy savings can be obtained.

To achieve calculation of the thermal comfort data 24, such as PMV, physiological data collected by wearable devices 120b or data collected by other personal device, such as sensors 120a embedded in smartphones of the users are used. The purpose is to understand and estimate some of the main elements, e.g., current physical activity (leading to metabolic rate) and clothing level (determining thermal insulation), that are needed to calculate the thermal comfort data 24 such as PMV. This can improve the personalization of the RL control algorithms 50 and maintain user wellbeing throughout the day.

While the disclosure has been particularly shown and described with reference to specific embodiments, it should be understood by those skilled in the art that various changes in form and detail may be made therein without departing from the spirit and scope of the present disclosure as defined by the appended claims. The scope of the present disclosure is thus indicated by the appended claims and all changes which come within the meaning and range of equivalency of the claims are therefore intended to be embraced.

## Claims

1. A method (800) for controlling a heating, ventilation and air conditioning (HVAC) system (10) in a building using a controlling system (100), the controlling system (100) comprising a HVAC data collector (110), a user data collector (120), a processor (130) and an HVAC controller (140), the method (800) comprising:
a step (810) of collecting HVAC data (12) of the HVAC system (10) by the HVAC data collector (110);
a step (820) of collecting user data (22) of each of at least one user (20) by the user data collector (120);
a step (830) of determining, by the processor (130), a state space data (30), an action space data (32) and a reward function (40) for each of a plurality of time windows of a day from the collected HVAC data (12), the collected user data (22), thermal comfort data (24) of the user (20) based on at least one target of a use pattern (14) of the time window;
a step (850) of obtaining, by the processor (130), optimal controlling action data (60) for each of the plurality of time windows of a day based on a reinforcement learning (RL) control algorithm (50) and the state space data (30) of the time window of a day for controlling the HVAC system (10),
wherein the respective use pattern (14) for each of the plurality of time windows of a day is determined according to a schedule.

2. The method (800) of claim 1, further comprising:
a step (840) of training, by the processor (130), the respective RL control algorithm (50) for each of the plurality of time windows of a day using the state space data (30), the action space data (32), the reward function (40) for the time window of a day and a training algorithm.

3. The method (800) of claim 1, wherein the optimal controlling action data (60) comprises an operating setpoint for temperature, fan speed and operation mode for each of the plurality of time windows of a day.

4. The method (800) of any of claims 1 to 3, further comprising:
a step (860) of controlling, by the HVAC controller (140), the HVAC system (10) according to the optimal controlling action data (60) for each of the plurality of time windows of a day.

5. The method (800) of claim 1, wherein the at least one target for each of the plurality of use patterns (14) is determined according to a predetermined setting or a setting selected by the user.

6. The method (800) of claim 1, wherein the thermal comfort data (24) of the user (20) is calculated based on American Society of Heating, Refrigerating and Air-Conditioning Engineers (ASHRAE)'s standard function using air temperature, humidity, mean radiant temperature, air speed, clothing level and metabolic rate obtained from the HVAC data collector (110), the user data collector (120) and the time of the day.

7. The method (800) of claim 1, wherein the thermal comfort data (24) of the user (20) is obtained based on feedback of the user (20) collected by a feedback collector (132).

8. The method (800) of claim 1, wherein the HVAC data (12) comprises room temperature, room humidity, operating set point for temperature, operating set point for fan speed, operational mode, refrigeration cycle temperatures, pressures and compressor speed, and energy consumption.

9. The method (800) of claim 1, wherein the user data (22) comprises temperature and humidity, light intensity, noise in the building, outdoor environment information, position, movement speed and physiological data of the user (20).

10. A controlling system (100) for controlling a heating, ventilation and air conditioning (HVAC) system (10) in a building comprising:
a HVAC data collector (110) configured to collect HVAC data (12) of the HVAC system (10);
a user data collector (120) configured to collect user data (22) of each of at least one user (20); and
a processor (130) configured to:
determine a state space data (30), an action space data (32) and a reward function (40) for each of a plurality of time windows of a day from the collected HVAC data (12), the collected user data (22), thermal comfort data (24) of the user (20) based on at least one target of a use pattern (14) of the time window;
obtain optimal controlling action data (60) for each of the plurality of time windows of a day based on a reinforcement learning (RL) control algorithm (50) and the state space data (30) of the time window of a day for controlling the HVAC system (10),
wherein the respective use pattern (14) for each of the plurality of time windows of a day is determined according to a schedule.

11. The controlling system (100) of claim 10, wherein the processor (130) is configured to:
train the respective RL control algorithm (50) for each of the plurality of time windows of a day using the state space data (30), the action space data (32), the reward function (40) for the time window of a day and a training algorithm.

12. The controlling system (100) of claim 10 or 11, further comprises a HVAC controller (140) configured to control the HVAC system (10) according to the optimal controlling action data (60) for each of the plurality of time windows of a day.

13. A computer program product comprising instructions which, when the program is executed by a computer, cause the computer to carry out:
a step (830) of determining a state space data (30), an action space data (32) and a reward function (40) for each of a plurality of time windows of a day from HVAC data (12) of a heating, ventilation and air conditioning (HVAC) system (10), user data (22) of each of at least one user (20), thermal comfort data (24) of the user (20) based on at least one target of a use pattern (14) of the time window, wherein the HVAC data (12) is collected by a HVAC data collector (110), and the user data (22) is collected by a user data collector (120);
a step (850) of obtaining optimal controlling action data (60) for each of the plurality of time windows of a day based on a reinforcement learning (RL) control algorithm (50) and the state space data (30) of the time window of a day for controlling the HVAC system (10),
wherein the respective use pattern (14) for each of the plurality of time windows of a day is determined according to a schedule.

14. A non-transitory computer-readable storage medium comprising instructions which, when executed by a computer, cause the computer to carry out:
a step (830) of determining a state space data (30), an action space data (32) and a reward function (40) for each of a plurality of time windows of a day from HVAC data (12) of a heating, ventilation and air conditioning (HVAC) system (10), user data (22) of each of at least one user (20), thermal comfort data (24) of the user (20) based on at least one target of a use pattern (14) of the time window, wherein the HVAC data (12) is collected by a HVAC data collector (110), and the user data (22) is collected by a user data collector (120);
a step (850) of obtaining optimal controlling action data (60) for each of the plurality of time windows of a day based on a reinforcement learning (RL) control algorithm (50) and the state space data (30) of the time window of a day for controlling the HVAC system (10),
wherein the respective use pattern (14) for each of the plurality of time windows of a day is determined according to a schedule.
